Europäisches Patentamt

European Patent Office

Office européen des brevets

(19)

(11) Veröffentlichungsnummer: **0 220 581**
**A1**

## EUROPÄISCHE PATENTANMELDUNG

(21) Anmeldenummer: **86114109.1**

(22) Anmeldetag: **11.10.86**

(51) Int. Cl.⁴: **F 16 C 27/06**, F 04 D 19/04

(30) Priorität: **24.10.85 DE 3537822**

(43) Veröffentlichungstag der Anmeldung: **06.05.87**
**Patentblatt 87/19**

(84) Benannte Vertragsstaaten: **CH DE FR GB LI**

(71) Anmelder: **Leybold-Heraeus GmbH, Bonner Strasse 498 Postfach 51 07 60, D-5000 Köln 51 (DE)**

(72) Erfinder: **Deters, Ludger, Dr., Am Heidstamm 36, D-5000 Köln 40 (DE)**
Erfinder: **Engländer, Heinrich, Raderstrasse 2, D-5170 Jülich (DE)**
Erfinder: **Urban, Dietrich, Rezagstrasse 1, D-5000 Köln 90 (DE)**

(74) Vertreter: **Leineweber, Jürgen, Dipl.-Phys., Am Heidstamm 78 a, D-5000 Köln 40 (DE)**

(54) **Vakuumpumpe mit Gehäuse und Rotor.**

(57) Die Erfindung bezieht sich auf eine Vakuumpumpe mit einem Gehäuse (1) und einem im Gehäuse angeordneten Rotor (3, 33), dessen Lagerungen (7, 8, 9) sich über Elastomerringe im Gehäuse abstützen. Um die vom Rotor erzeugten Schwingungen oder Vibrationen zu reduzieren, wird vorgeschlagen, eine oder mehrere Elastomerring-Anordnungen (11, 12) zwischen Lagerung (7, 8, 9) und Gehäuse (1) vorzusehen, welche jeweils mindestens zwei sich gegenseitig stützende Elastomerringe (13) umfassen, von denen einer der Lagerung und ein weiterer dem Gehäuse anliegen.

Vakuumpumpe mit Gehäuse und Rotor

Die Erfindung bezieht sich auf eine Vakuumpumpe mit Gehäuse und im Gehäuse angeordnetem Rotor, dessen Lagerungen sich über Elastomerringe im Gehäuse abstützen.

Bei mit Rotoren betriebenen Vakuumpumpen (Rotationsvakuumpumpen, Turbomolekularpumpen oder dergleichen) besteht das Problem, daß ihr Betrieb aufgrund von Unwuchten des Rotors unvermeidbar mit mehr oder weniger Vibrationen verbunden ist, die sich auf die Einrichtung, an die die Vakuumpumpe angeschlossen ist, übertragen. Häufig ist dieses nicht erwünscht. Insbesondere beim Betrieb von Elektronenmikroskopen, die in der Regel mit Turbomolekular-Vakuumpumpen ausgerüstet sein können, stören Vibrationen in hohem Maße. Zur Lösung des Problems sind bereits Vorschläge gemacht worden, die sich auf Maßnahmen im Bereich der Verbindungsleitungen zwischen der Vakuumpumpe und der angeschlossenen Einrichtung beziehen (vgl. japanische Patentanmeldungen 56-92396 und 56-151287). Diese sind technisch aufwendig und platzraubend.

Aus der DE-OS 30 39 196 ist eine Vakuumpumpe der eingangs genannten Art bekannt, bei der sich eine Spindellagerung über zwei axial beabstandete Elastomerringe im Pumpengehäuse abstützt. Jedem der beiden Lager ist jeweils ein Elastomerring zugeordnet. Eine besonders wirksame Verhinderung der Übertragung von Rotorschwingungen auf das Gehäuse ist damit nicht verbunden.

Der vorliegenden Erfindung liegt die Aufgabe zugrunde, eine Vakuumpumpe der eingangs genannten Art zu schaffen, bei der

0220581

die am Gehäuse auftretenden Schwingungen oder Vibrationen erheblich reduziert sind.

Erfindungsgemäß wird diese Aufgabe durch eine oder mehrere Elastomerring-Anordnungen zwischen Lagerung und Gehäuse gelöst, welche jeweils mindestens zwei sich gegenseitig stützende Elastomerringe umfassen, von denen einer der Lagerung und ein weiterer dem Gehäuse anliegt. Bei einer in dieser Weise ausgebildeten Lagerabstützung ist die Übertragung von Schwingungen vom Rotor auf das Gehäuse in hohem Maße gedämpft, da die Federsteifigkeit der Dichtringanordnung infolge der Hintereinanderschaltung der Dichtringe um ein Vielfaches reduziert ist. Ein weiterer Vorteil besteht in dem geringen Platzbedarf der erfindungsgemäßen Anordnung.

Eine besonders weiche Ankopplung der rotierenden Einheit an das Pumpengehäuse wird durch drei hintereinandergeschaltete Dämpfungsringe erreicht. Um eine Fixierung der Ringe in ihrer Lage zu erzielen, ist es zweckmäßig, im Querschnitt winkelförmige Zwischenringe zu verwenden. Mit Zwischenringen dieser Art kann außerdem die Federkennlinie der Elastomer-Zwischenringeinheit beeinflußt werden.

Weitere Vorteile und Einzelheiten der Erfindung sollen anhand von in den Figuren 1 bis 4 schematisch darsgestellten Ausführungsbeispielen erläutert werden. Es zeigen:

Fig. 1 einen Schnitt durch eine Turbomolekular-Vakuumpumpe mit Spindellagerung,

Fig. 2 einen Schnitt durch eine der beiden Seitenkammern einer Wälzkolben-Vakuumpumpe,

Fig. 3 einen Teilschnitt durch eine Turbomolekular-Vakuumpumpe mit oberhalb und unterhalb des Antriebsmotors angeordneten Lagern und

Fig. 4 a bis c unterschiedliche Elastomerring-
Anordnungen.

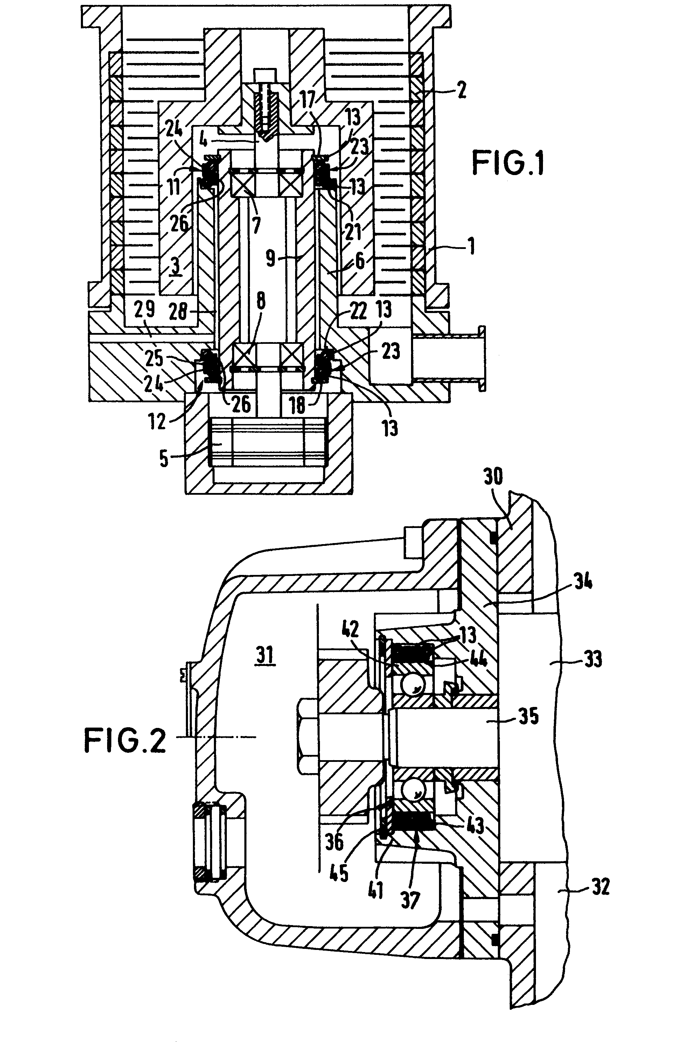

Die in Fig. 1 dargestellte Turbomolekular-Vakuumpumpe umfaßt das Gehäuse 1, das darin angeordnete Statorpaket 2, den Rotor 3 sowie seine Welle 4 mit dem Antriebsmotor 5. Die Welle 4 ist in einer gehäusefesten Lagerbuchse 6 gelagert, und zwar mit einer Spindellagerung, die im wesentlichen aus den Lagern 7 und 8 und der Spindelhülse 9 besteht. Die ruhende Spindelhülse 9 stützt sich über zwei Elastomerring-Anordnungen 11 und 12 ab. Diese umfassen jeweils zwei Elastomerringe 13, von denen jeweils ein radial weiter innen liegender Ring der Spindelhülse 9 und ein weiter außen liegender Ring an der Innenseite der Lagerbuchse 6 anliegt. Die Fixierung der Ringpaare in der gewünschten Lage erfolgt an der Lagerbuchse mittels Sicherungsringen 17, 18 und an der Lagerbuchse 6 mittels stufenförmiger Eindrehungen 21, 22.

Zwischen den beiden Elastomerringen 13 der beiden Ringpaare ist jeweils ein doppelwinkelförmiger Zwischenring 23 angeordnet, der ebenfalls der Festlegung der gegenseitigen Position der Elastomerringe 13 dient. Er weist einen konzentrischen Abschnitt 24, der den der Spindelhülse 9 anliegenden Ring von außen stützt, einen radialen Abschnitt 25 und einen weiteren konzentrischen Abschnitt 26 auf, der den dem Gehäuse 1 anliegenden Ring von innen stützt.

Die Elastomerring-Anordnung nach Fig. 1 dämpft sowohl axial als auch radial gerichtete Schwingungen der Antriebseinheit in hohem Maße. Bestehen die Elastomerringe 13 aus identischem Material (Viton, Silicon oder dergleichen), dann halbiert sich die Gesamtfedersteifigkeit im Vergleich zur Verwendung nur eines Elastomerringes. Sind die Steifigkeiten $c_1$ und $c_2$ von zwei Elastomerdichtringen aufgrund unterschiedlicher Materialien oder Durchmesser verschieden, dann gilt für die Gesamtfedersteifigkeit

$$C_{ges} = \frac{C_1 \times C_2}{C_1 + C_2}.$$

Die Stärke und Abstufung der beiden Zwischenringe 23 ist so gewählt, daß die jeweils der Spindelhülse 9 benachbarte Flanke 26 bei normalem Betrieb die Spindelhülse 9 nicht berührt. Bei größeren Auslenkungen findet eine Berührung statt. In radialer Richtung ist dann die Gesamtfedersteifigkeit gleich der Federsteifigkeit des jeweils radial weiter außen liegenden Ringes. Dieser Betriebszustand ist unerwünscht und wird infolge der veränderten Federkennlinie durch das Auftreten stärkerer Vibrationen erkennbar.

Zwischen den Elastomerring-Anordnungen 11 und 12, der Lagerbuchse 6 und der Spindelhülse 9 besteht ein zum Lagerraum der Pumpe abgeschlossener Raum 28, der beim dargestellten Ausführungsbeispiel über den Kanal 29 nach außen hin geöffnet ist. Der Raum 28 steht deshalb unter Atmosphärendruck und nicht unter dem Druck des Vorvakuums des Lagerraumes. Der erhöhte Druck bewirkt eine Verbesserung der Wärmeübertragung von der Spindelhülse 9 auf das Gehäuse 6 und damit nach außen. Diese Wärmeübertragung und damit die Kühlung der Lagerung kann noch verbessert werden, wenn der Raum 28 über den Kanal 29 mit Atmosphären- oder Überdruck versorgt wird oder mit einer Flüssigkeit, zumindest teilweise, gefüllt wird.

Fig. 2 zeigt einen Schnitt durch die Seitenkammer 31 einer Wälzkolben-Vakuumpumpe 30. Vom Schöpfraum 32 mit den Rotoren 33 (nur einer ist sichtbar) ist die Seitenkammer 31 durch die Wandung 34 getrennt. In dieser Trennwand sind die Wellen 35 (nur eine ist sichtbar) gelagert. Die Lager 36 stützen sich über erfindungsgemäß gestaltete Elastomerring-Anordnungen 37 in der Trennwand 34 ab. Bei

0220581

dem in Fig. 2 dargestellten Ausführungsbeispiel sind drei Elastomerringe 13 vorgesehen, von denen sich die radial und axial äußeren Ringe in der Lagerbuchse 41 und der innere bzw. mittlere Ring auf dem äußeren Lagerring 42 des Kugellagers 36 abstützen. Zur Fixierung der Elastomerringe 13 sind wieder eine stufenförmige Eindrehung 43 in der Lagerbuchse 41, ein im Querschnitt vier Winkel aufweisender Zwischenring 44 sowie Sicherungsringe 45 vorgesehen. Die in diesem Ausführungsbeispiel beschriebene Elastomerring-Anordnung dämpft axiale und radiale Schwingungen des rotierenden Systems und verhindert damit deren Übertragung auf das Pumpengehäuse 30.

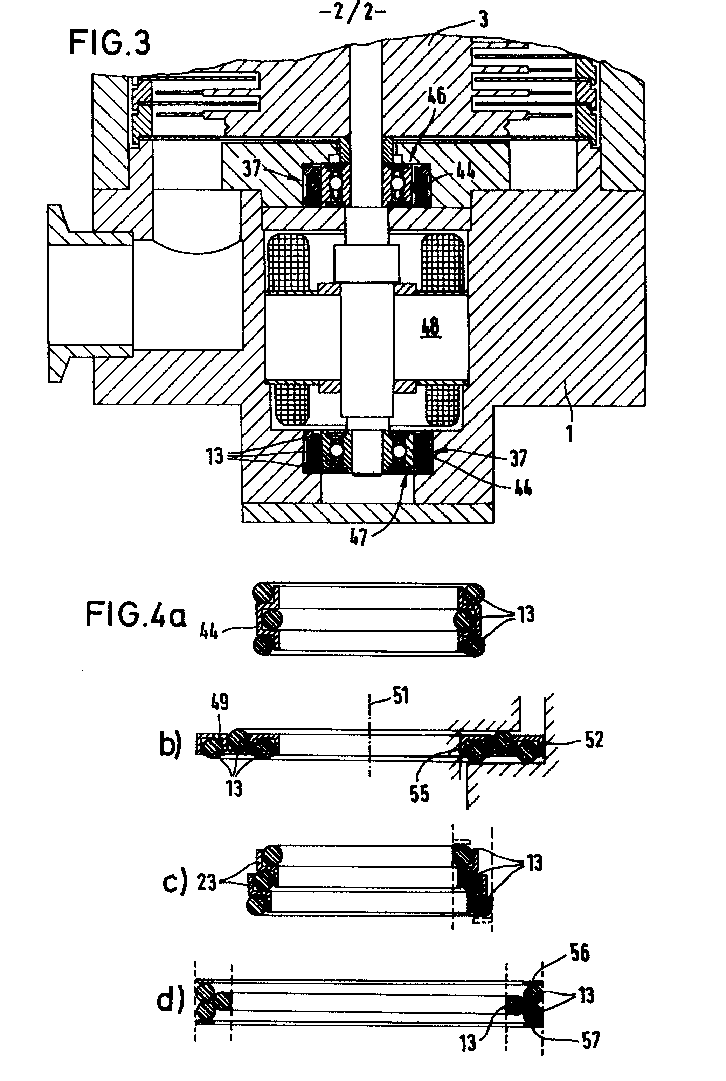

In Fig. 3 ist eine Turbomolekular-Vakuumpumpe dargestellt, deren Rotor 3 in zwei Lagern 46 und 47 fliegend gelagert ist. Der Antriebsmotor 48 ist zwischen diesen Lagern angeordnet. Die Dichtringanordnungen 37, über die sich die Lagerungen 46 und 47 im Gehäuse 1 abstützen, sind aufgebaut wie beim Ausführungsbeispiel nach Fig. 2. Sie sind deshalb mit gleichen Bezugsziffern versehen. Während des Normalbetriebs der Turbomolekular-Vakuumpumpe dämpfen Elastomerring-Anordnungen dieser Art sowohl radiale als auch axiale Schwingungen.

Fig. 4 zeigt einige Möglichkeiten der Anordnung von Elastomerringen zur Erzielung der gewünschten Eigenschaften. Fig. 4a zeigt ein Ausführungsbeispiel, wie es zu den Ausführungsbeispielen nach Fig. 2 und 3 beschrieben wurde.

Beim Ausführungsbeispiel nach Fig. 4b sind drei Elastomerringe 13 vorgesehen, von denen der innere und der äußere radial, der mittlere demgegenüber mit Hilfe des Zwischenringes 44 axial versetzt ist. Der Zwischenring 49 weist konzentrisch zur Achse 51 angeordnete Flanken 52 und 53 auf, die zur Anlage an die abzustützenden Bauteile bestimmt sind. Dieses System vermag zwar Axialschwingungen zu dämpfen, Radialschwingungen jedoch nicht.

Fig. 4c zeigt ein Ausführungsbeispiel mit drei im wesentlichen axial angeordneten Dichtungsringen 13. Zusätzlich sind zwei von einander unabhängige Zwischenringe 23 vorgesehen, die jeweils im Querschnitt doppelwinkelförmig gestaltet sind und die Elastomerringe 13 in ihrer Position halten. Eine Anordnung dieser Art vermag sowohl Radial- als auch Axialschwingungen besonders gut zu dämpfen.

Fig. 4d zeigt eine Lösung ohne Zwischenring. Zwei äußere Ringe 13 stützen sich auf dem äußeren Teil, ein innerer Ring auf dem Innenteil ab. Der innere Ring 40 stützt sich seinerseits auf die beiden äußeren Ringe. Durch Sicherungsringe 56 und 57 wird das System fixiert.

Die Elastomerringe 13 müssen nicht unbedingt geschlossen ausgebildet sein; es können auch Bandabschnitte mit einer nicht zu großen radialen Öffnung verwendet werden. Das Material der Zwischenringe ist zweckmäßigerweise Aluminium oder Edelstahl.

0220581

Vakuumpumpe mit Gehäuse und Rotor

Patentansprüche

1. Vakuumpumpe mit Gehäuse und im Gehäuse angeordneten Rotor, dessen Lagerungen sich über Elastomerringe im Gehäuse abstützen, d a d u r c h   g e k e n n - z e i c h n e t , daß eine oder mehrere Elastomerring-Anordnungen (11, 12, 37) zwischen Lagerung (7,8,9; 36; 46,47) und Gehäuse (1, 30) vorgesehen sind, welche jeweils mindestens zwei sich gegenseitig stützende Elastomerringe (13) umfassen, von denen einer der Lagerung und ein weiterer dem Gehäuse anliegen.

2. Vakuumpumpe nach Anspruch 1, d a d u r c h g e k e n n z e i c h n e t , daß den Elastomer-ringen (13) ein im Querschnitt winkelförmiger Zwischenring (23, 44, 49) zugeordnet ist.

3. Vakuumpumpe nach Anspruch 2, d a d u r c h g e k e n n z e i c h n e t , daß der Zwischen-ring (23, 44, 49) Flanken aufweist, die sich bei stärkeren Unwuchten an das Gehäuse (1, 30) oder an den Außenring (9) der Lagerung (7,8,9; 36; 46,47) anlegen.

4. Vakuumpumpe nach einem der vorhergehenden Ansprüche, d a d u r c h   g e k e n n z e i c h n e t , daß zur Sicherung der Elastomerring-Anordnungen (11, 12, 37) in der gewünschten Lage stufenförmige Eindrehungen (22, 43) und/oder Sicherungsringe (17, 18, 45; 56, 57) vorgesehen sind.

5. Vakuumpumpe nach einem der Ansprüche 1 bis 4, d a d u r c h g e k e n n z e i c h n e t , daß die Elastomerring-Anordnungen (37) drei Elastomerringe (13) umfassen.

6. Turbomolekular-Vakuumpumpe mit einem Gehäuse und einer Lagerung, d a d u r c h   g e k e n n z e i c h n e t , daß sich die Lagerungen (7, 8, 9, 46, 47) über Elastomerring-Anordnungen (11, 12, 34) auf das Gehäuse (1) abstützen.

7. Turbomolekular-Vakuumpumpe nach Anspruch 6, d a d u r c h   g e k e n n z e i c h n e t , daß der von den Elastomerring-Anordnungen (11, 12), der Lagerbuchse (6) und der Spindelhülse (9) gebildete Raum (28) mit einem nach außen führenden Kanal (29) versehen ist.

8. Wälzkolben-Vakuumpumpe mit mindestens einem Seitenraum, der über eine Trennwand vom Schöpfraum getrennt ist, und mit Lagerungen für die Wälzkolben in der Trennwand, d a d u r c h   g e k e n n z e i c h n e t ,   daß sich die Lagerungen über Elastomerring-Anordnungen nach den Ansprüchen 1 bis 5 in der Trennwand (34) abstützen.

FIG.1

FIG.2

FIG.3

FIG.4a

b)

c)

d)

Europäisches
Patentamt

EUROPÄISCHER RECHERCHENBERICHT

0220581
Nummer der Anmeldung

EP  86 11 4109

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 310 481  (RAVA)<br>* Figur 1; Seite 3, Zeilen  7-16; Seite  4,  Zeile  36  -  Seite  5, Zeile 3; Patentanspruch 8 * | 1,6 | F 16 C  27/06<br>F 04 D  19/04 |
| Y | | 2,3,5, 8 | |
| Y | US-A-4 044 977  (FEUCHT)<br><br>* Figuren 2-5; Spalte  2,  Zeilen 41-54;  Spalte  3,  Zeilen  1-10; Patentanspruch 1 * | 2,3,5, 8 | |
| A | US-A-4 402 618  (FORTMANN)<br>* Figuren 1,2; Spalte  1,  Zeilen 6-11;  Spalte  3,  Zeilen  30-45; Patentanspruch 4 * | 1,5 | |
| A | DE-A-1 575 628  (CITROEN)<br>* Figuren 1-4; Seite 2, Absatz 1; Patentansprüche 2,4 * | 2,4 | |
| A | DE-A-2 624 951  (HURTH)<br>* Figuren 1,2; Patentanspruch  2; Seite 3, Absatz 2 * | 4 | |
| | ---          -/- | | |

**RECHERCHIERTE SACHGEBIETE (Int. Cl.4)**

F 04 D
F 01 C
F 16 C
F 16 F

Der vorliegende Recherchenbericht wurde für alle Patentansprüche erstellt.

| Recherchenort | Abschlußdatum der Recherche | Prüfer |
|---|---|---|
| DEN HAAG | 23-01-1987 | TEERLING J.H. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82

# EUROPÄISCHER RECHERCHENBERICHT

Europäisches Patentamt

0220581
Nummer der Anmeldung

EP 86 11 4109

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|-----------|-----|-----|
| A | DE-A-1 918 129 (MESSERSCHMITT-BÖLKOW-BLOHM) * Figuren 1,2; Seite 3, Absatz 1 * | 5 | |
| A | DE-C- 965 774 (MEMPEL) * Figuren 2,3; Seite 2, Zeilen 81-98; Patentanspruch 1 * | 3 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|-----------|-----------|--------|
| DEN HAAG | 23-01-1987 | TEERLING J.H. |